(19) **Europäisches Patentamt**
**European Patent Office**
**Office européen des brevets**

(11) **EP 1 970 576 B1**

(12) **EUROPÄISCHE PATENTSCHRIFT**

(45) Veröffentlichungstag und Bekanntmachung des Hinweises auf die Patenterteilung:
**14.11.2012 Patentblatt 2012/46**

(51) Int Cl.:
*F16B 25/00* (2006.01)      *F16B 35/04* (2006.01)

(21) Anmeldenummer: **08102322.8**

(22) Anmeldetag: **06.03.2008**

(54) **Spanlos gewindeformende Schraube**

Screw forming a thread without cutting chips

Vis autotaraudeuse sans production de copeaux

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.03.2007 DE 102007000154**

(43) Veröffentlichungstag der Anmeldung:
**17.09.2008 Patentblatt 2008/38**

(73) Patentinhaber: **HILTI Aktiengesellschaft 9494 Schaan (LI)**

(72) Erfinder:
• **Matthiesen, Sven 88131 Lindau (DE)**

• **Hertlein, Peter 9491 Ruggell (LI)**
• **Baumgartner, Michael 9462 Montlingen (CH)**

(74) Vertreter: **Wildi, Roland Hilti Aktiengesellschaft, Corporate Intellectual Property Feldkircherstrasse 100 Postfach 333 9494 Schaan (LI)**

(56) Entgegenhaltungen:
**EP-A2- 0 845 607      DE-A1- 19 633 730 US-A- 3 942 405      US-A1- 2003 210 970**

EP 1 970 576 B1

**Beschreibung**

Die vorliegende Erfindung betrifft eine spanlos gewindeformende Schraube der im Oberbegriff von Patentanspruch 1 genannten Art. Derartige Schrauben werden insbesondere zur Verschraubung von Metallblechen genutzt. Eine Schraube dieser Gattung ist aus der US 2003/210970 bekannt.

Aus der US 4 194 430 ist eine gewindeformende Schraube mit einem Kopf und einem sich daran anschliessenden Schaft bekannt, der an seiner dem Kopf abgewandten Seite in einen spitzkonischen Abschnitt übergeht und in einer spitzen bzw. punktförmigen Spitze endet. Umfänglich am Schaft ist ein Gewinde angeordnet, das ausgehend vom Endbereich des Schaftes zum spitzkonischen Abschnitt hin in seiner Gewindehöhe bis zur Spitze stetig abnimmt.

Von Nachteil bei einer derartigen gewindeformenden Schraube ist, dass sie zwar in vorgebohrten Löchern in harten Materialien ein Gewinde ausformen kann, bei einer Anwendung an nicht vorgebohrten Blechen aus Metall jedoch - wenn überhaupt - nur für sehr dünne Bleche verwendbar ist, wie sie z. B. im Automobilbau verwendet werden. Zur Verschraubung eines Stapels von mehreren übereinander liegenden Blechen miteinander ist die Schraube nicht geeignet.

Aus der US 5 597 357 ist eine Selbstbohrschraube bekannt die an dem, dem Kopf abgewandten Ende des Schafts eine Bohrspitze aufweist. Mit dieser Selbstbohrschraube ist es möglich auch Metallbleche mit Dicken grösser 2 mm zu penetrieren.

Von Nachteil bei dieser Selbstbohrschraube ist jedoch, dass beim Setzvorgang Späne entstehen, die aus Korrosionsgründen aufwändig entfernt werden müssen. Ferner muss vom Anwender während des gesamten Bohrvorgangs eine hohe Anpresskraft aufgebracht werden. Durch die Zerspanung geht ausserdem Material verloren, welches dann nicht an der Haltekraftaufnahme beteiligt sein kann.

Die Aufgabe der vorliegenden Erfindung liegt darin, die oben genannten Nachteile zu vermeiden und eine gewindeformende Schraube bereitzustellen, die spanlos auch Stapel von wenigstens zwei übereinander liegenden Metallblechen mit einer Gesamtdicke von wenigstens 2 mm durchdringen kann.

Dieses wird durch die in Patentanspruch 1 wiedergegebenen Massnahmen erreicht. Demnach weist der die Spitze aufweisende Spitzenbereich wo er sich an den konischen Abschnitt anschliesser einen Durchmesser zwischen 0,25 und 0, 35 mm auf und weist der sich an den Spitzenbereich anschliessende konische Abschnitt einen Spitzenwinkel zwischen 20° und 30° auf. Ein dem Kopf abgewandter Anfangspunkt des Gewindes weist ferner einen Abstand von 0 bis 0,3 mm zur Spitze auf. Durch die erfindungsgemässe Spitzengeometrie kann eine gewindeformende Schraube Bleche und Blechstapel mit einer Gesamtdicke von bis zu ca. 3,1 mm (Stahlblech) spanlos penetrieren. Bei weniger harten Metallblechen als Stahlblechen ergeben sich entsprechend grössere penetrierbare Gesamtdicken.

Vorteilhaft verläuft das Gewinde vom zylindrischen Abschnitt bis zum konischen Abschnitt, wobei die Gewindehöhe im konischen Abschnitt zum Spitzenbereich hin abnimmt. Durch diese Massnahme wird ein gutes Einschraubverhalten der Schraube erreicht, so dass sich die Schraube durch die Schraubendrehung nach einem ersten Penetrieren selbsttätig weiter in das Material bzw. den Untergrund hineinzieht.

Von Vorteil ist es dabei ferner, wenn die Gewindehöhe im Bereich des konischen Abschnitts definiert ist durch die Formel: $H = ((\tan(alpha/2) + F_B) * X + 0,2\text{ mm}) - R_K$, wobei $F_B$ eine Konstante mit einem Wert zwischen 0,04 bis 0,25 und $R_K$ der Radius des Schraubenkerns in einer Distanz X zur Spitze ist. Hierdurch wird ein optimales Einschraubverhalten der Schraube erreicht.

Vorteilhaft weisen die Schrauben einen Durchmesser im Bereich des zylindrischen Abschnitts des Schaftes auf, der zwischen 3,0 und 6,3 mm liegt, wodurch eine gute Abstimmung zwischen Penetrationsverhalten und erforderlicher Eindreh- und Anpresskraft gewährleistet wird.

In den Zeichnungen ist die Erfindung in einem Ausführungsbeispiel dargestellt.

Es zeigen:

Fig. 1    eine erfindungsgemässe loch- und gewindeformende Schraube im Längsschnitt,

Fig. 2    ein Detail der Schraube gemäss der Markierung II aus Fig. 1.

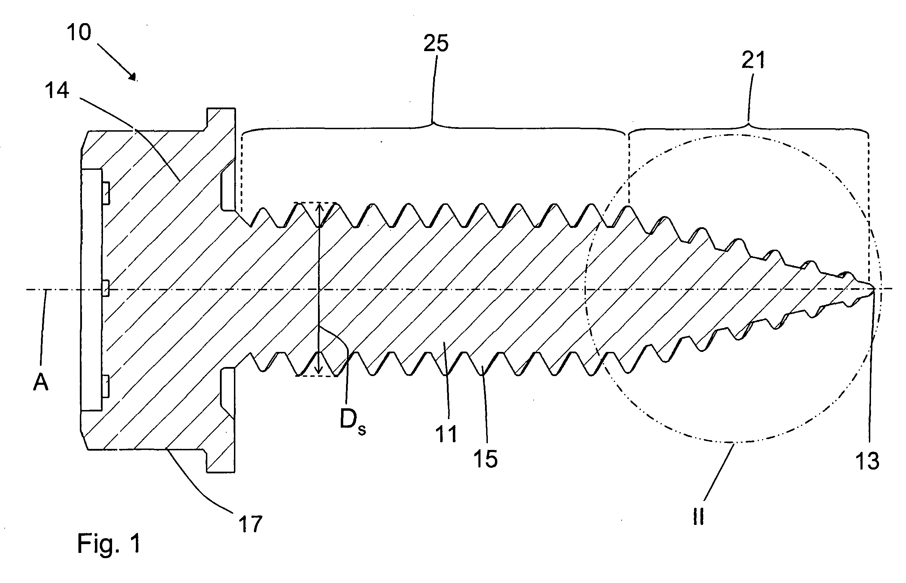

Die in Figur 1 dargestellte spanlos loch- und gewindeformende Schraube 10 weist einen ein Gewinde 15 tragenden Schaft 11 auf, an dessen einem Ende eine, insbesondere punktförmige, Spitze 13 und an dessen gegenüberliegenden anderen Ende ein Kopf 14 angeordnet ist. Eine Schraubenachse A definiert dabei eine axiale Richtung der Schraube 10. Der Kopf 14 weist ein Lastangriffsteil 17 für ein Schraubwerkzeug, wie einen Schrauberbit oder einen Schraubenschlüssel auf. Ein konischer Abschnitt 21 erstreckt sich von einem die Spitze aufweisenden Spitzenbereich 13 in Richtung des Kopfes 14. An diesen konischen Abschnitt 21 schliesst sich an seinem der Spitze abgewandten Ende ein zylindrischer Abschnitt 25 an, der einen Durchmesser $D_s$ von ca. 3,0 - 6,3 mm aufweist.

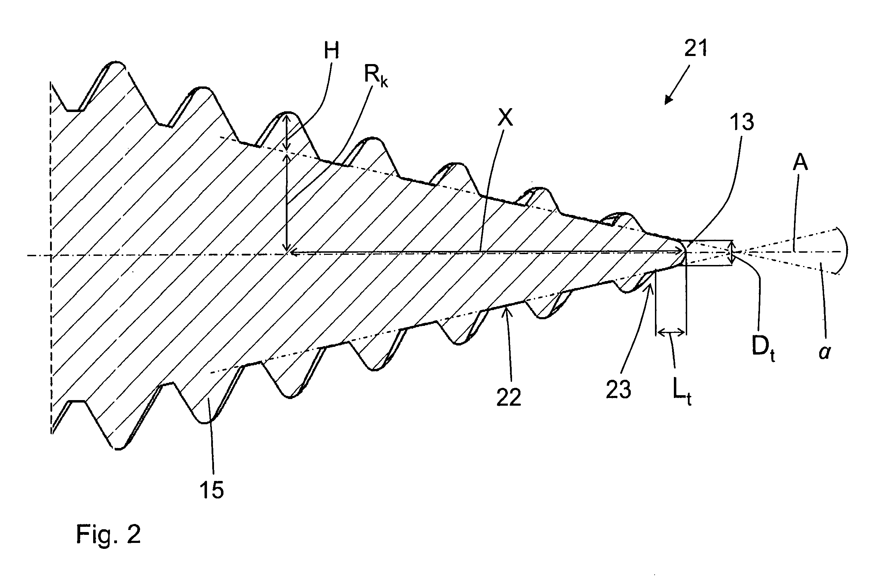

Wie insbesondere aus Fig. 2 ersichtlich ist, weist der konische Abschnitt 21 bezogen auf den Gewindegrund 22 einen Spitzenwinkel alpha zwischen 20° und 30° auf. Der Spitzenbereich 13 weist ferner einen Durchmesser $D_t$ zwischen 0,25 und 0, 35 mm auf.

Das Gewinde 15 weist eine Gewindehöhe H auf, die im Bereich des zylindrischen Abschnitts 25 im Wesentlichen konstant ist. Im konischen Abschnitt 21 nimmt die Gewindehöhe H jedoch in Richtung zum Spitzenbereich 13 hin ab. Ein Ausgangspunkt 23 des Gewindes liegt dabei in einem Abstand $L_t$ von 0 bis 0,3 mm zur Spitze 13. Die Gewindehöhe H im Bereich des konischen Abschnitts 21 ist definiert durch die Funktion:

$$H = ((\tan(alpha/2) + F_B) * X + 0,2 \text{ mm}) - R_K$$

wobei $F_B$ eine Konstante mit einem Wert zwischen 0,04 bis 0,25 und $R_K$ der Radius des Schraubenkerns (Radius von der Achse A bis zum Gewindegrund 22) in einer Distanz X zur Spitze 13 ist.

Zur Reibungsverminderung kann die Schraube wenigstens im Bereich des Schaftes 11 noch mit einer reibungsmindernden Beschichtung, wie z. B. einem Wachs oder Schneidöl, ausgerüstet sein.

**Patentansprüche**

1. Spanlos gewindeformende Schraube (10) mit einem wenigstens bereichsweise ein Gewinde (15) tragenden Schaft (11), an dessen einem Ende ein eine Spitze aufweisender Spitzenbereich (13) und an dessen gegenüberliegendem anderen Ende ein Kopf (14) angeordnet ist, und mit wenigstens einem konischen Abschnitt (21), der sich von dem Spitzenbereich (13) ausgehend in Richtung des Kopfes (14) erstreckt, und mit einem zylindrischen Abschnitt (25), der zwischen dem konischen Abschnitt (21) und dem Kopf (14) angeordnet ist, **dadurch gekennzeichnet, dass** der Spitzenbereich (13) WO er sich an den konischen Abschnitt anschliesst einen Durchmesser ($D_t$) zwischen 0,25 und 0,35 mm aufweist, dass der sich an den Spitzenbereich (13) anschliessende konische Abschnitt (21) bezogen auf den Gewindegrund (22) einen Spitzenwinkel (alpha) zwischen 20° und 30° aufweist und dass ein dem Kopf (14) abgewandter Anfangspunkt (23) des Gewindes (15) einen Abstand ($L_t$) von 0 bis 0,3 mm zur Spitze aufweist.

2. Schraube nach Anspruch 1, **dadurch gekennzeichnet, dass** das Gewinde (15) vom zylindrischen Abschnitt (25) bis zum konischen Abschnitt (21) verläuft, wobei eine Gewindehöhe (H) des Gewindes im konischen Abschnitt (21) zum Spitzenbereich (13) hin abnimmt.

3. Schraube nach Anspruch 1 oder 2, **dadurch gekennzeichnet, dass** die Gewindehöhe (H) im Bereich des konischen Abschnitts (21) definiert ist durch

$$H = ((\tan(alpha/2) + F_B) * X + 0,2 \text{ mm}) - R_K$$

wobei $F_a$ eine Konstante mit einem Wert zwischen 0,04 bis 0,25 und $R_k$ der Radius des Schraubenkerns in einer Distanz (X) zur Spitze ist

4. Schraube nach Anspruch 1, **gekennzeichnet durch** einen Durchmesser ($D_s$) im Bereich des zylindrischen Abschnitts (25) des Schaftes (11) zwischen 3,0 und 6,3 mm.

**Claims**

1. Non-cutting thread-forming screw (10), comprising a shaft (11) carrying a thread (15) at least zonally, at one end of which shaft (11) there is arranged a tip region (13) having a tip and at the opposite end a head (14), and comprising at least one conical section (21) which extends, starting from the tip region (13), in the direction of the head (14), and a cylindrical section (25) arranged between the conical section (21) and the head (14), **characterised in that** the tip region (13) has a diameter ($D_1$) from 0.25 to 0.35 mm where it adjoins the conical section (21), **in that** the conical section (21) adjoining the tip region (13) has a tip angle (alpha) from 20° to 30° with respect to the thread root (22), and **in that** a starting point (23) of the thread (15) oriented away from the head (14) has a distance ($L_t$) of 0 to 0.3 mm from the tip.

2. Screw according to Claim 1, **characterised in that** the thread (15) runs from the cylindrical section (25) to the conical section (21), a thread height (H) of the thread in the conical section (21) decreasing towards the tip region (13).

3. Screw according to Claim 1 or 2, **characterised in that** the thread height (H) in the region of the conical section (21) is defined by

$$H = ((\tan(alpha/2) + F_B) * X + 0.2 \text{ mm}) - R_K$$

where $F_B$ is a constant with a value from 0.04 to 0.25 and $R_K$ is the radius of the screw core at a distance (X) from the tip.

4. Screw according to Claim 1, **characterised by** a diameter ($D_S$) from 3.0 to 6.3 mm in the region of the cylindrical section (25) of the shaft (11).

**Revendications**

1. Vis (10) autotaraudeuse sans production de copeaux, comportant une tige (11) portant un filetage (15) au moins dans certaines zones, à une extrémité de laquelle est agencée une zone de pointe (13) présentant une pointe et à l'autre extrémité opposée de laquelle est agencée une tête (14), et comportant au moins une partie conique (21) qui s'étend à partir de la zone de pointe (13) en direction de la tête (14), et comportant une partie cylindrique (25) qui est agencée entre la partie conique (21) et la tête (14), **caractérisée en ce que** la zone de pointe (13), à l'endroit où elle rejoint la partie conique, présente un diamètre ($D_t$) compris entre 0,25 et 0,35 mm, **en ce que** la partie conique (21) rejoignant la zone de pointe (13) forme un angle de pointe (alpha) par rapport au fond de filet (22) compris entre 20° et 30°, et **en ce qu'**un point de départ (23) du filetage (15) opposé à la tête (14) est espacé de la pointe d'une distance ($L_t$) de 0 à 0,3 mm.

2. Vis selon la revendication 1, **caractérisée en ce que** le filetage (15) s'étend de la partie cylindrique (25) à la partie conique (21), dans laquelle une hauteur de filetage (H) du filetage diminue dans la partie conique (21) vers la zone de pointe (13).

3. Vis selon la revendication 1 ou 2, **caractérisée en ce que** la hauteur de filetage (H) dans la zone de la partie conique (21) est définie par :

$$H = ((\tan (alpha/2) + F_B) * X + 0,2 \text{ mm}) - R_K$$

dans laquelle $F_B$ est une constante avec une valeur comprise entre 0,04 et 0,25, et $R_K$ est le rayon du noyau de vis à une distance (X) de la pointe.

4. Vis selon la revendication 1, **caractérisée par** un diamètre ($D_S$) dans la zone de la partie cylindrique (25) de la tige (11) compris entre 3,0 et 6,3 mm,

Fig. 1

Fig. 2

EP 1 970 576 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030210970 A
- US 4194430 A
- US 5597357 A